# DEMANDE DE BREVET EUROPEEN

(11) **EP 1 808 743 A1**
(43) Date de publication de la demande: **18.07.2007**
(21) Numéro de dépôt: 05112908.8
(22) Date de dépôt: 23.12.2005
(51) Int. Cl.: G06F 1/24

(54) **Procédé pour contrôler un circuit à microcontrôleur après une opération de remise à zéro, et circuit à microcontrôleur pour sa mise en oeuvre**

(71) Demandeur: EM Microelectronic-Marin SA, 2074 Marin (CH)
(72) Inventeur: Jaeggi, Hugo, 2046, Fontaines (CH)
(74) Mandataire: Robert, Vincent

(57) **Abrégé**

Le procédé permet de contrôler un circuit à microcontrôleur après une opération de remise à zéro. Le circuit comprend notamment un microcontrôleur et des moyens de supervision du niveau de la tension d'alimentation du circuit à microcontrôleur. Le microcontrôleur est constitué notamment d'un microprocesseur, d'une unité de mise à zéro et d'un oscillateur pour fournir des signaux d'horloge (CLK) pour cadencer des opérations traitées notamment dans le microprocesseur. Une instruction de remise à zéro (SysRes) suite à une perturbation ou à une action anormale survenue dans le mode de fonctionnement normal du circuit à microcontrôleur est fournie pour entrer dans un mode de remise à zéro. L'instruction commande un registre à verrouillage des moyens de supervision, qui fournit un signal (IN) pour enclencher de manière automatique les moyens de supervision. Dès la mise en fonction des moyens de supervision, un signal de commande (Reset) est fourni à l'unité de remise à zéro du microcontrôleur pour maintenir plusieurs parties du microcontrôleur dans un état de repos. Une comparaison du niveau de la tension d'alimentation par rapport à un seuil bas de référence de tension d'alimentation et par rapport à un seuil haut de référence de tension d'alimentation est également effectuée dans les moyens de supervision. Une remise en fonction du microcontrôleur au terme d'un mode de remise à zéro n'intervient qu'après que le niveau de tension d'alimentation contrôle se trouve dans la marge de tension définie par les premier et second seuil de référence de tension.

## Description

L'invention concerne un procédé pour contrôler un circuit à microcontrôleur après une opération de remise à zéro. Le circuit comprend notamment un microcontrôleur et des moyens de supervision du niveau de la tension d'alimentation du circuit à microcontrôleur.

L'invention concerne également un circuit à microcontrôleur pour la mise en oeuvre du procédé.

Des moyens de supervision du niveau d'une tension d'alimentation peuvent être prévus dans un circuit à microcontrôleur pour contrôler que ledit circuit fonctionne correctement dans une marge de tension d'alimentation bien définie. Normalement, ces moyens de supervision gèrent constamment l'alimentation en puissance du circuit à microcontrôleur, qui peut fonctionner à la plus faible tension d'alimentation admise. Ceci permet de placer le microcontrôleur ou un autre élément du circuit dans un mode de remise à zéro dès que le niveau de la tension d'alimentation est en dehors de la marge définie.

Comme le circuit à microcontrôleur est susceptible de fonctionner à une faible alimentation de puissance, il peut survenir des perturbations ou des actions anormales lors du fonctionnement dudit circuit, ce qui peut le rendre instable. Ces perturbations ou actions anormales, telles qu'une faute momentanée de puissance, causent généralement une remise à zéro notamment d'un microprocesseur du microcontrôleur de manière à permettre une réinitialisation de valeurs connues dudit circuit. Ces perturbations du circuit peuvent être par exemple dues à des décharges électrostatiques (ESD), à des surtensions ou sous-tensions, à une charge excessive reliée au circuit, à un niveau de tension d'une pile insuffisant, à une hausse ou baisse subite de température, ou à d'autres perturbations.

Avec des circuits à microcontrôleur à la plus faible puissance, les moyens de supervision ne doivent également pas être connectés en permanence, car ils absorbent un courant de consommation important (plusieurs pA). De ce fait, il est préférable, que ces moyens de supervision ne fonctionnent que périodiquement pour un contrôle du niveau de la tension d'alimentation pour des circuits équipant un appareil électrique alimenté par une ou plusieurs piles.

Après chaque perturbation ou action anormale conduisant à une opération de remise à zéro du circuit à microcontrôleur, il subsiste une période critique depuis la fin de l'état de remise à zéro jusqu'au moment où le microprocesseur du microcontrôleur est en mesure d'enclencher les moyens de supervision de la tension d'alimentation. Cela constitue un inconvénient, car si le niveau de tension à la fin de l'état de remise à zéro est en dehors d'une marge de tension définie pour le fonctionnement normal du circuit à microcontrôleur, la mise en fonction des moyens de supervision peut échouer. Par conséquent, un mauvais fonctionnement du circuit à microcontrôleur peut apparaître.

L'invention a donc pour but principal de fournir un procédé pour contrôler un circuit à microcontrôleur après une opération de remise à zéro de certaines parties dudit circuit suite à une perturbation ou à une action anormale afin de pallier les inconvénients cités ci-dessus.

A cet effet, l'invention concerne un procédé de contrôle d'un circuit à microcontrôleur cité ci-devant, qui comprend les caractéristiques mentionnées dans la revendication 1.

Des étapes particulières avantageuses du procédé sont définies dans les revendications dépendantes 2 à 7.

Un avantage du procédé de contrôle d'un circuit à microcontrôleur est que les moyens de supervision sont automatiquement mis en fonction dès le début d'une opération de remise à zéro. Ces moyens de supervision maintiennent au terme de la période de remise à zéro une suspension de fonctionnement de certaines parties du microcontrôleur jusqu'à ce que le niveau de la tension d'alimentation soit contrôlé dans une marge de tension définie. La suspension de fonctionnement imposée par les moyens de supervision concerne principalement un microprocesseur du microcontrôleur. Une fois que la tension d'alimentation est contrôlée à un niveau suffisant de fonctionnement, tout le circuit à microcontrôleur passe dans un mode de fonctionnement normal. De cette manière, cela évite au microcontrôleur de produire des erreurs lors de certaines opérations dans une phase de réinitialisation si le niveau de tension d'alimentation n'est pas à un niveau suffisant ou est au-dessus d'un seuil haut de tension d'alimentation. Le circuit à microcontrôleur est donc protégé grâce aux moyens de supervision contre toute perturbation ou action anormale.

Avantageusement, les moyens de supervision sont déclenchés après avoir effectué le contrôle du niveau de la tension d'alimentation à la fin d'un mode de contrôle au passage dans un mode de fonctionnement normal. De cette façon, la consommation électrique du circuit à microcontrôleur pendant le fonctionnement normal peut être réduite tout en assurant une certaine protection dudit circuit.

A cet effet, l'invention concerne également un circuit à microcontrôleur pour la mise en oeuvre du procédé cité ci-devant, qui comprend les caractéristiques définies dans la revendication 8.

Une forme d'exécution spécifique du circuit à microcontrôleur est définie dans la revendication dépendante 9.

Les buts, avantages et caractéristiques du procédé pour contrôler un circuit à microcontrôleur après une opération de remise à zéro, ainsi que ledit circuit pour sa mise en oeuvre apparaîtront mieux dans la description suivante en regard des dessins sur lesquels :
- la figure 1 représente de manière simplifiée des composants électroniques du circuit à microcontrôleur pour la mise en oeuvre du procédé selon l'invention,
- la figure 2 représente une forme d'exécution des moyens de supervision du circuit à microcontrôleur pour la mise en oeuvre du procédé selon l'invention, et
- la figure 3 représente un diagramme temporel illustrant la séquence de différents signaux pendant et après une remise à zéro du circuit à microcontrôleur suite à une perturbation ou à une action anormale pour la mise en oeuvre du procédé selon l'invention.

Dans la description suivante comme différents composants électroniques du circuit à microcontrôleur sont bien connus, ils ne seront pas explicités en détail.

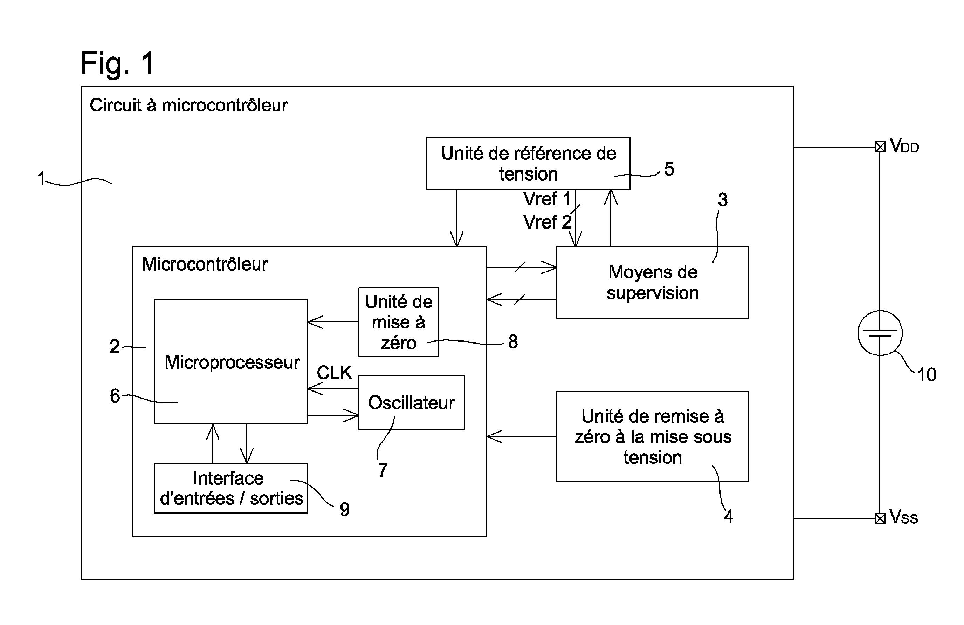

La figure 1 montre un schéma simplifié des différents composants du circuit à microcontrôleur 1. Le circuit comprend principalement un microcontrôleur 2, des moyens de supervision du niveau de la tension d'alimentation 3, une unité de remise à zéro à la mise sous tension 4, et une unité de tension de référence 5 pour fournir notamment une ou deux tensions de référence Vref1, Vref2 aux moyens de supervision. Le circuit à microcontrôleur peut être connecté par ses bornes d'alimentation V_{DD} et V_{SS} à une source de tension continue 10 pour son alimentation électrique. La source de tension peut être une ou plusieurs piles susceptibles de fournir une tension comprise entre au moins 0.9 V à 5.5 V par exemple. De cette manière, le circuit à microcontrôleur 1 peut fonctionner normalement dans un mode actif, c'est-à-dire dans un mode de fonctionnement normal sans perturbation.

Le microcontrôleur 2 comprend principalement un oscillateur 7 par exemple du type RC, qui produit dans un mode actif des signaux d'horloge CLK pour cadencer des opérations traitées dans un microprocesseur 6. La fréquence des signaux d'horloge peut être choisie entre 32 et 800 kHz, par exemple à 250 kHz. Le microcontrôleur comprend également une unité de mise à zéro 8 pour suspendre le fonctionnement notamment du microprocesseur 6 lorsque le niveau de la tension d'alimentation est en dehors d'une marge de tension définie. Le fonctionnement du microprocesseur est suspendu par une mise à zéro (Reset) dans le cas où survient au moins une perturbation ou une action anormale. Les perturbations ou actions anormales peuvent être dues à des décharges électrostatiques (ESD), à des surtensions ou sous-tensions, à une charge excessive reliée au circuit, à un niveau de tension d'une pile insuffisant, à une hausse ou baisse subite de température, ou à d'autres perturbations.

Le microcontrôleur 2 comprend encore une interface d'entrées/sorties 9 de signaux de commande, par exemple pour la commande d'un dispositif d'affichage et/ou d'un dispositif motorisé à circuit électronique d'entraînement du moteur d'un appareil électrique dans lequel le circuit à microcontrôleur est monté. L'appareil peut être un rasoir électrique, ou une brosse à dent électrique, ou un téléphone portable ou divers autres instruments alimentés principalement par une ou plusieurs piles.

Dans la présente invention, le microcontrôleur 2 peut être basé sur un microcontrôleur EM6680 produit et fourni par l'entreprise EM Microelectronic-Marin SA en Suisse. Dans ce microcontrôleur EM6680, l'unité de remise à zéro à la mise sous tension 4 est intégrée dans la structure du microcontrôleur. Il peut être envisagé également à l'avenir d'intégrer aussi bien les moyens de supervision 3 et l'unité de référence de tension 5 en combinaison d'un régulateur de tension dans la structure du microcontrôleur 2.

Selon une caractéristique principale de l'invention, les moyens de supervision 3 sont prévus pour être automatiquement enclenchés dès qu'une opération de remise à zéro est générée par le circuit à microcontrôleur suite à une perturbation ou à une action anormale. L'instruction de remise à zéro SysRes générée dans le circuit à microcontrôleur est fournie aux moyens de supervision pour leur enclenchement.

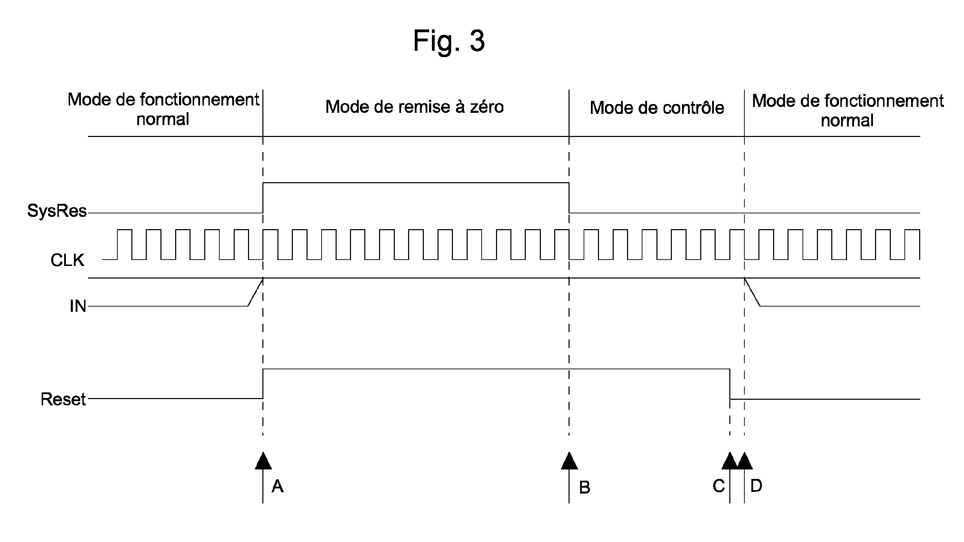

Dès la génération de l'instruction de remise à zéro, le fonctionnement du microprocesseur 6 est directement suspendu par l'unité de mise à zéro 8 sous la commande d'un signal Reset produit par les moyens de supervision 3. Au terme de la période de remise à zéro et pendant une période de contrôle, les moyens de supervision restent enclenchés pour contrôler le niveau de la tension d'alimentation. Une fois que le niveau de la tension d'alimentation contrôlé par les moyens de supervision est dans une marge de tension d'alimentation bien définie, le circuit à microcontrôleur est réinitialisé dans un mode de fonctionnement normal comme expliqué ci-après en référence à la figure 3.

Les moyens de supervision 3 ont donc pour tâche de contrôler le niveau de la tension d'alimentation pendant et juste après une opération de remise à zéro causée par une perturbation du circuit avant de permettre au microprocesseur 6 de pouvoir exécuter diverses opérations en fonctionnement normal. Tant que le niveau de la tension d'alimentation est en dehors d'une marge de tension spécifiée, notamment en dessous d'un seuil minimal de tension, le microprocesseur est toujours suspendu de fonctionnement afin de le protéger et éviter qu'il produise des erreurs lors de l'exécution de diverses opérations.

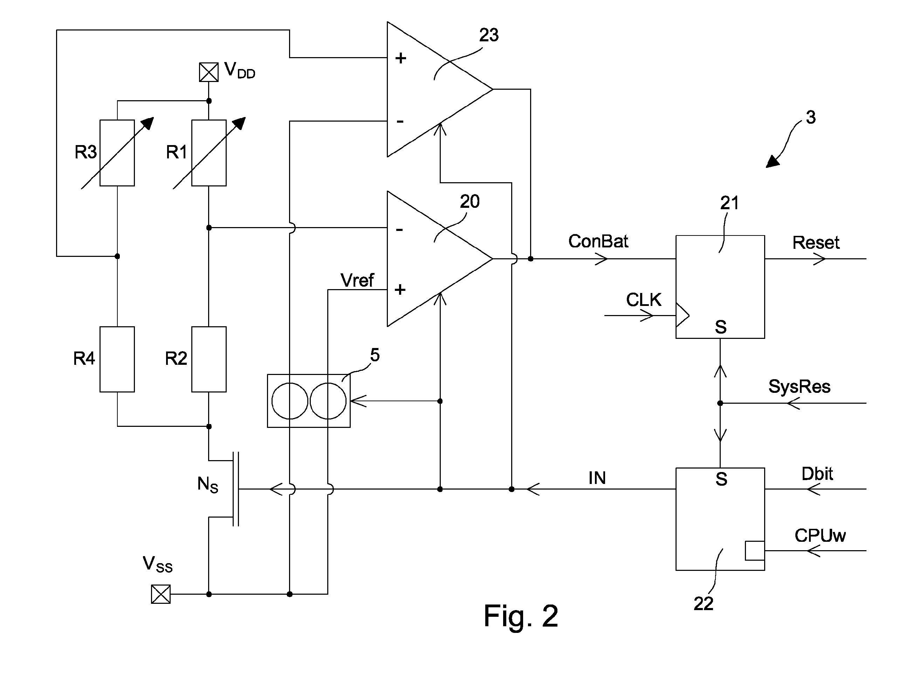

La figure 2 montre une forme d'exécution des moyens de supervision 3 pour le contrôle du niveau de tension d'alimentation depuis une mise à zéro du circuit à microcontrôleur suite à une perturbation ou à une action anormale détectée. Les moyens de supervision 3 reçoivent donc une instruction SysRes de mise à zéro, qui va permettre d'enclencher lesdits moyens de supervision, ainsi que l'unité de référence de tension pour la fourniture d'une ou deux tensions de référence Vref1 et Vref2. Cette instruction SysRes est fournie sous la forme d'une impulsion de tension, dont la valeur de tension à l'état haut défini "1" peut être proche de la tension d'alimentation V_{DD} ou d'une tension régulée inférieure.

L'instruction SysRes est fournie à une borne Set d'une bascule 21, qui est cadencée par un signal d'horloge CLK fourni par l'oscillateur du microcontrôleur. Cette instruction SysRes permet de produire ou forcer un signal de commande Reset à l'état "1" en sortie, qui est transmis à l'unité de mise à zéro du microcontrôleur afin de suspendre le fonctionnement du microprocesseur. L'instruction SysRes à l'état "1" est également fournie à une borne Set d'un registre à verrouillage 22 (Latch), qui impose ou force un signal de sortie IN à l'état "1 ". Ceci permet d'enclencher la fonction de supervision ou surveillance avant d'entrer à nouveau dans le mode de fonctionnement normal.

Les moyens de supervision 3 comprennent également un premier diviseur résistif constitué par deux résistances R1 et R2 en série, et un second diviseur résistif constitué par deux résistances R3 et R4 en série. Le second diviseur résistif est monté en parallèle du premier diviseur résistif. Les deux diviseurs résistifs sont connectés en série avec un transistor de type nMOS N_{S} entre les deux bornes V_{DD} et V_{SS} de la source de tension continue. La borne de source du transistor N_{S} est reliée à la borne V_{SS} de la source de tension, alors que la borne de drain est reliée aux résistances R2 et R4. La borne de grille du transistor N_{S} reçoit le signal d'enclenchement IN, qui est à l'état "1" dès la réception de l'instruction SysRes par les moyens de supervision. De ce fait, le transistor N_{S} devient conducteur afin qu'un courant traverse les deux diviseurs résistifs.

Le noeud de connexion des deux résistances R1 et R2 est relié à une borne négative d'un comparateur 20, alors que la borne positive du comparateur reçoit une première tension basse de référence Vref1 fournie par l'unité de référence de tension 5. Le signal d'enclenchement IN à l'état "1" permet l'enclenchement de l'unité de référence de tension 5 et du comparateur 20. La valeur de la première tension de référence Vref1 peut être déterminée par un seuil de tension d'un transistor ou par un circuit du type bandgap de l'unité de référence de tension. De préférence, cette valeur de la première tension de référence Vref1 peut être fixée à 0.35 V représentative d'un seuil bas de référence de la tension d'alimentation.

Le noeud de connexion des deux résistances R3 et R4 est relié pour sa part à une borne positive d'un comparateur 23, alors que la borne négative du comparateur reçoit une seconde tension haute de référence Vref2 fournie par l'unité de référence de tension 5. La sortie du comparateur 23 est reliée à la sortie du comparateur 20. Le signal d'enclenchement IN à l'état "1" permet l'enclenchement également du comparateur 23. La valeur de la seconde tension de référence Vref2 peut être déterminée par un circuit du type bandgap de l'unité de référence de tension 5. De préférence, cette valeur de la seconde tension de référence Vref2 peut être fixée voisine de 0.5 V en dessous d'un seuil haut de référence de la tension d'alimentation.

Dans le cas où le niveau de tension d'alimentation minimum du circuit à microcontrôleur est proche de 0.9 V, le comparateur 20 doit être en mesure de détecter quand le niveau de la tension d'alimentation descend en dessous d'un seuil bas de référence fixé par exemple à 1.15 V par sécurité. Pour ce faire, la valeur de la première résistance R1 peut être ajustée par rapport à la valeur de la seconde résistance R2 pour déterminer une tension proche de Vref1 au noeud de connexion des deux résistances quand le niveau de la tension d'alimentation est proche de 1.15 V. Le comparateur 20 fournit un signal de commande ConBat, qui est à l'état "1" si la tension d'alimentation est en dessous du seuil bas de référence, et qui est à l'état "0" proche de V_{SS} si la tension d'alimentation est suffisante, c'est-à-dire au-dessus du seuil bas de référence. Avec le signal de commande ConBat à l'état "1" fourni à la bascule 21, un signal Reset à l'état "1" en sortie de la bascule 21 commande l'unité de remise à zéro du microcontrôleur pour suspendre le fonctionnement du microprocesseur.

Dans le cas où le niveau de la tension d'alimentation maximum admise du circuit à microcontrôleur est proche de 5.5 V, le comparateur 23 doit être en mesure de détecter que le niveau de la tension d'alimentation monte au-dessus d'un seuil haut de référence fixé par exemple à 5.25 V par sécurité. Pour ce faire, la valeur de la troisième résistance R3 peut être ajustée par rapport à la valeur de la quatrième résistance R4 pour déterminer une tension proche de Vref2 au noeud de connexion des deux résistances quand le niveau de la tension d'alimentation est proche de 5.25 V. Le comparateur 23 fournit un signal de commande ConBat, qui est à l'état "1" si la tension d'alimentation est au-dessus du seuil haut de référence, et qui est à l'état "0" proche de V_{SS} si la tension d'alimentation est suffisante, c'est-à-dire au-dessous du seuil haut de référence. Comme indiqué ci-devant, avec le signal de commande ConBat à l'état "1" fourni à la bascule 21, un signal Reset à l'état "1" en sortie de la bascule 21 commande l'unité de remise à zéro du microcontrôleur pour suspendre le fonctionnement du microprocesseur.

Une fois que le niveau de la tension d'alimentation contrôlé dans les moyens de supervision 3 est dans une marge définie de tension d'alimentation dans le mode de contrôle, le circuit à microcontrôleur peut revenir dans un mode de fonctionnement normal où le microprocesseur peut exécuter normalement toutes ses opérations. Par mesure d'économie de courant, les moyens de supervision, ainsi que l'unité de référence de tension peuvent être déconnectés dans ce mode de fonctionnement normal. Pour ce faire, le microprocesseur fournit une instruction d'écriture CPUw à l'état "1", ainsi qu'une donnée Dbit à l'état "0" au registre à verrouillage 22 pour imposer ou forcer un signal de sortie IN à l'état "0". De cette manière, le transistor N_{S} devient non conducteur, et les comparateurs 20 et 23, et l'unité de référence de tension 5 sont déconnectés.

La figure 3 représente un diagramme temporel illustrant la séquence de différents signaux décrits ci-dessus notamment lors d'une une remise à zéro du circuit à microcontrôleur suite à une perturbation ou à une action anormale survenue.

Dans le mode de fonctionnement normal du circuit à microcontrôleur jusqu'à l'instant désigné A, les moyens de supervision peuvent être soit déconnectés par mesure d'économie de courant, soit en fonction par le signal d'enclenchement IN à l'état "1" comme montré. Les moyens de supervision en fonction surveillent le niveau de la tension d'alimentation, qui peut éventuellement fluctuer en fonction d'une charge excessive connectée au circuit à microcontrôleur, ou d'un court-circuit, ou des effets de la température par exemple. L'oscillateur est en fonction pour fournir des signaux d'horloge CLK notamment pour cadencer des opérations traitées dans le microprocesseur en fonction. L'instruction de remise à zéro SysRes, ainsi que le signal Reset sont à l'état "0".

Après ce mode de fonctionnement normal dès l'instant A, une perturbation dans le fonctionnement du microcontrôleur survient. Ceci provoque une remise à zéro du circuit à microcontrôleur dans un mode de remise à zéro de manière à assurer une réinitialisation du circuit. Le circuit à microcontrôleur génère ainsi une instruction de remise à zéro SysRes à l'état "1 ". L'instruction SysRes est fournie au registre à verrouillage des moyens de supervision pour forcer le signal de sortie IN à l'état "1" afin d'enclencher lesdits moyens de supervision directement dans le mode de remise à zéro. Cette instruction SysRes est également fournie à la bascule des moyens de supervision pour forcer à l'état "1" le signal Reset pour suspendre momentanément le fonctionnement du microprocesseur.

La fin du mode de remise à zéro à l'instant B est signalée par le passage du signal SysRes de l'état "1" à l'état "0", mais les moyens de supervision restent toujours enclenchés pour assurer une supervision ou surveillance du niveau de la tension d'alimentation dans un mode de contrôle. Pendant ce mode de contrôle, les moyens de supervision ont pour tâche de contrôler le niveau de la tension d'alimentation. Tant que le niveau de tension est au-dessous du seuil bas ou au-dessus du seuil haut de référence de tension d'alimentation, le microprocesseur n'est pas en mesure de redémarrer.

A l'instant C, le niveau de tension d'alimentation est contrôlé dans la marge de tension définie admise, ce qui fait passer le signal Reset à l'état "0" pour permettre de remettre en fonction le microprocesseur. Au même instant C ou à l'instant D, le logiciel du microprocesseur peut commander le registre à verrouillage des moyens de supervision pour soit déconnecter lesdits moyens de supervision, soit les laisser en fonction pour le contrôle du niveau de la tension d'alimentation. Bien entendu, les moyens de supervision peuvent être enclenchés automatiquement par périodes temporelles déterminées à l'aide d'une programmation effectuée dans le microcontrôleur pour surveiller la tension d'alimentation à tout moment.

A partir de la description qui vient d'être faite, de multiples variantes de réalisation du procédé pour contrôler un circuit à microcontrôleur après une opération de remise à zéro, ainsi que du circuit à microcontrôleur peuvent être conçues par l'homme du métier sans sortir du cadre de l'invention définie par les revendications. Au lieu d'utiliser deux diviseurs résistifs, il est possible de monter en série trois résistances constituant un seul diviseur résistif, dont le noeud de connexion entre chaque résistance est relié respectivement à une borne d'entrée de chaque comparateur.

## Revendications

1. Procédé pour contrôler un circuit à microcontrôleur (1) après une opération de remise à zéro, le circuit comprenant notamment un microcontrôleur (2) et des moyens de supervision (3) du niveau de la tension d'alimentation du circuit à microcontrôleur, **caractérisé en ce que** le procédé comprend une série d'étapes consistant à :
- fournir une instruction de remise à zéro (SysRes) suite à une perturbation ou à une action anormale survenue dans le mode de fonctionnement normal du circuit à microcontrôleur pour entrer dans un mode de remise à zéro, ladite instruction imposant un état d'enclenchement automatique des moyens de supervision (3) qui commandent le maintien dans un état de repos de plusieurs parties du microcontrôleur (2),
- contrôler dans les moyens de supervision le niveau de la tension d'alimentation, et
- remettre en fonction le microcontrôleur au terme du mode de remise à zéro uniquement si les moyens de supervision en fonction ont déterminé un niveau de tension d'alimentation suffisant pour le fonctionnement du microcontrôleur.

2. Procédé selon la revendication 1, **caractérisé en ce que** les moyens de supervision passent d'un état déconnecté à un état d'enclenchement automatique dès la réception de l'instruction de remise à zéro (SysRes), ladite instruction imposant l'état d'enclenchement aux moyens de supervision durant toute la durée du mode de remise à zéro.

3. Procédé selon la revendication 1 pour lequel le microcontrôleur (2) comprend un oscillateur (7) susceptible de produire des signaux d'horloge (CLK) pour cadencer des opérations notamment traitées par un microprocesseur (6) dans un mode de fonctionnement normal, et une unité de mise à zéro (8) destinée à suspendre le fonctionnement du microprocesseur sous la commande des moyens de supervision (3), **caractérisé en ce que** les moyens de supervision (3) en fonction fournissent un signal de commande (Reset) à l'unité de mise à zéro (8) dès la réception de l'instruction de remise à zéro (SysRes) pour que ladite unité de mise à zéro commande la suspension de fonctionnement du microprocesseur (6), ainsi que pendant toute la durée de contrôle du niveau de la tension d'alimentation au terme du mode de remise à zéro, jusqu'à ce que le niveau de la tension d'alimentation soit contrôlé suffisant pour le fonctionnement du microcontrôleur.

4. Procédé selon l'une des revendications précédentes, **caractérisé en ce que** dès la réception de l'instruction de remise à zéro (SysRes), le niveau de la tension d'alimentation est comparé dans les moyens de supervision (3) en fonction à un premier seuil bas de référence de tension d'alimentation, et à un second seuil haut de référence de tension d'alimentation de manière à commander la remise en fonction du microcontrôleur après le terme du mode de remise à zéro uniquement si le niveau de tension d'alimentation contrôlé se trouve dans la marge de tension définie entre les premier et second seuils de référence de tension d'alimentation.

5. Procédé selon la revendication 4, pour lequel les moyens de supervision comprennent un premier comparateur de tension (20), un second comparateur de tension (23), un premier diviseur résistif constitué d'une première et d'une seconde résistances (R1, R2) en série, un second diviseur résistif constitué d'une troisième et d'une quatrième résistances (R3, R4) en série, le second diviseur résistif étant monté en parallèle du premier diviseur résistif, les deux diviseurs résistifs étant connectés en série avec un transistor de type MOS (N_{S}) entre deux bornes (V_{DD}, V_{SS}) d'une source de tension continue d'alimentation (10), une borne de grille du transistor étant commandée par un signal de sortie (IN) d'un registre à verrouillage (22), qui est commandé par l'instruction de remise à zéro (SysRes) de manière à rendre conducteur ledit transistor pour la mise en fonction des diviseurs résistifs et des comparateurs, le noeud de connexion des résistances du premier diviseur étant relié à une borne négative d'entrée du premier comparateur, alors qu'une borne positive d'entrée du premier comparateur reçoit une première tension basse de référence (Vref1) fournie par une unité de référence de tension (5), le noeud de connexion des résistances du second diviseur étant relié à une borne positive d'entrée du second comparateur, alors qu'une borne négative d'entrée du second comparateur reçoit une seconde tension haute de référence (Vref2) fournie par l'unité de référence de tension (5), **caractérisé en ce que** dès que le niveau de la tension au noeud de connexion des résistances du premier diviseur, qui détermine le niveau de tension d'alimentation, est contrôlé supérieur à la première tension de référence (Vref1), qui représente le seuil bas de référence de tension, par le premier comparateur des moyens de supervision, et dès que le niveau de la tension au noeud de connexion des résistances du second diviseur est contrôlé inférieur à la seconde tension de référence (Vref2), qui représente le seuil haut de référence de tension, un signal de sortie commun (ConBat) des premier et second comparateurs est relié à une entrée d'une bascule (21) des moyens de supervision, qui est cadencée par les signaux d'horloge (CLK) pour fournir un signal de commande (Reset) à l'unité de mise à zéro (8) afin de remettre en fonction le microprocesseur (6) et placer le microcontrôleur dans un mode de fonctionnement normal.

6. Procédé selon l'une des revendications précédentes, **caractérisé en ce qu'**une instruction de déconnexion (Dbit, CPUw) des moyens de supervision (3) est fournie par le microcontrôleur (2) après la remise en fonction du microcontrôleur permettant de placer dans un mode de repos lesdits moyens de supervision et l'unité de référence de tension (5).

7. Procédé selon l'une des revendications précédentes, **caractérisé en ce que** dans le mode de fonctionnement normal du circuit à microcontrôleur, les moyens de supervision (3) sont enclenchés par périodes temporelles déterminées par le microcontrôleur de manière à contrôler le niveau de la tension d'alimentation.

8. Circuit à microcontrôleur (1) pour la mise en oeuvre du procédé de contrôle selon l'une des revendications précédentes, ledit circuit comprenant des moyens de supervision (3) du niveau de la tension d'alimentation du circuit à microcontrôleur, un microcontrôleur (2), qui comprend un microprocesseur (6), un oscillateur (7) pour fournir des signaux d'horloge (CLK) pour cadencer des opérations du microprocesseur, et une unité de mise à zéro (8) commandée par les moyens de supervision, **caractérisé en ce que** les moyens de supervision comprennent un premier comparateur de tension (20), un second comparateur de tension (23), un premier diviseur résistif constitué d'une première et d'une seconde résistances (R1, R2) en série, un second diviseur résistif constitué d'une troisième et d'une quatrième résistances (R3, R4) en série, le second diviseur résistif étant monté en parallèle du premier diviseur résistif, les deux diviseurs résistifs étant connectés en série avec un transistor de type MOS (N_{S}) entre deux bornes (V_{DD}, V_{SS}) d'une source de tension continue d'alimentation (10), une borne de grille du transistor étant commandée par un signal de sortie (IN) d'un registre à verrouillage (22), qui est commandé par l'instruction de remise à zéro (SysRes) de manière à rendre conducteur ledit transistor pour la mise en fonction des diviseurs résistifs et des comparateurs, **en ce que** le noeud de connexion des résistances (R1, R2) du premier diviseur, qui détermine le niveau de la tension d'alimentation, est relié à une borne négative d'entrée du premier comparateur, alors qu'une borne positive d'entrée du premier comparateur reçoit une première tension basse de référence (Vref1) fournie par une unité de référence de tension (5), qui représente un seuil bas de référence de tension d'alimentation, et **en ce que** le noeud de connexion des résistances (R3, R4) du second diviseur est relié à une borne positive d'entrée du second comparateur, alors qu'une borne négative d'entrée du second comparateur reçoit une seconde tension haute de référence (Vref2) fournie par l'unité de référence de tension (5), qui représente un seuil haut de référence de tension d'alimentation.

9. Circuit à microcontrôleur (1) selon la revendication 8, **caractérisé en ce qu'**une instruction de remise à zéro (SysRes) suite à une perturbation ou à une action anormale survenue dans le mode de fonctionnement normal du circuit à microcontrôleur (1) est fournie à un registre à verrouillage (22) des moyens de supervision pour imposer un état d'enclenchement automatique des moyens de supervision en rendant conducteur le transistor MOS pour la mise en fonction des diviseurs résistifs et des comparateurs, et **en ce qu'**une borne de sortie commune des comparateurs (20, 23) est connectée à une borne d'entrée d'une bascule (21) des moyens de supervision, qui est cadencée par des signaux d'horloge (CLK) de l'oscillateur (7) de manière à fournir un signal de commande (Reset) à l'unité de mise à zéro (8) pour suspendre le fonctionnement du microprocesseur si le niveau de la tension d'alimentation est au-dessous du seuil bas de référence de tension d'alimentation ou au-dessus du seuil haut de référence de tension d'alimentation.
